# EUROPEAN PATENT SPECIFICATION

(11) **EP 1 930 896 B1**
(45) Date of publication and mention of the grant of the patent: **23.07.2014**
(21) Application number: 07122129.5
(22) Date of filing: 04.08.2004
(51) Int. Cl.: G11B 20/12, G11B 20/18

(54) **Write-once optical disc, and method and apparatus for recording/playback management information on/from optical disc**
Einmal beschreibbarer optischer Datenträger sowie Verfahren und Vorrichtung zur Aufzeichnung/Wiedergabe von Verwaltungsinformationen auf den/von dem optischen Datenträger
Disque optique non réinscriptible et procédé et appareil d'enregistrement/lecture d'informations de gestion sur/depuis un disque optique

(30) Priority: 05.08.2003 KR 20030054165; 20.10.2003 KR 20030073088; 24.02.2004 US 546961 P; 10.05.2004 KR 20040032677
(43) Date of publication of application: 11.06.2008
(62) Divisional of application: 04748511.5
(73) Proprietor: LG Electronics Inc., Youngdungpo-gu Seoul 150-721 (KR)
(72) Inventor: Park, Yong Cheol, Gwacheon-si, Gyeonggi-do (KR)
(74) Representative: Vossius & Partner

(56) References cited:
- EP-A- 0 350 920
- EP-A- 1 026 681
- WO-A-03/030173
- WO-A1-2004/029941
- WO-A2-2004/059648
- US-A- 5 065 388

## Description

### Technical Field

The present invention relates to a write-once optical disc and an apparatus and method for recording/playing-back management information on/from the optical disc such as a Write-Once Blu-ray Disc (BD-WO).

### Background Art

As an optical recording medium, optical discs on which high-capacity data can be recorded are widely being used. Among them, a new high-density optical recording medium (HD-DVD), for example, a Blu-ray disc, has been recently developed for recording and storing high-definition video data and high-quality audio data for a long-term period.

The Blu-ray disc involves the next generation HD-DVD technology and is the next generation optical recording solution, which has an excellent capability to store data more than existing DVDs. Recently, a technical specification of an international standard for HD-DVD has been established. Various standards for Blu-ray discs are being prepared. Particularly the standards for a write-once Blu-ray disc (BD-WO) are being proposed.

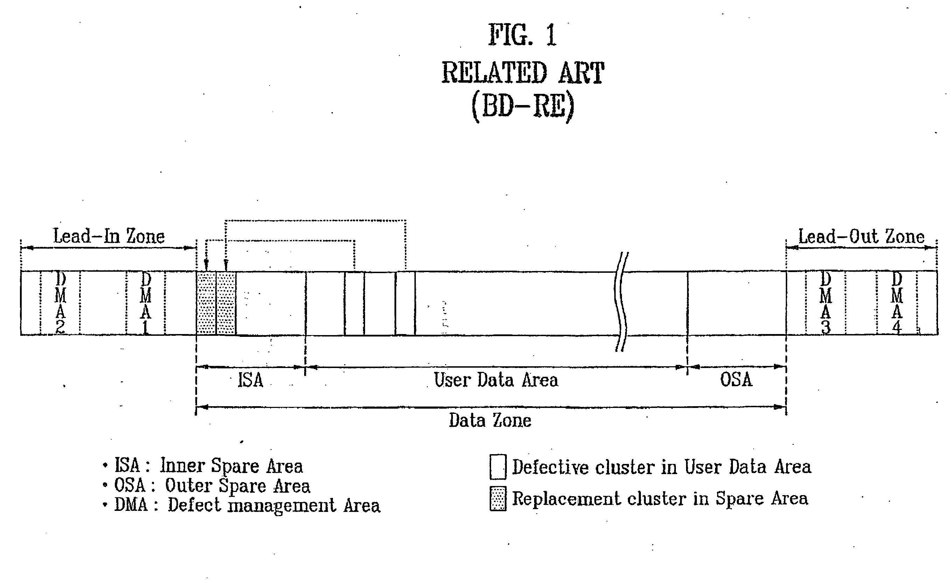

FIG. 1 schematically illustrates the structure of a recording area of a rewritable Blu-ray disc (BD-RE) according to a related art. As shown in FIG. 1, the disc is divided into a lead-in zone, a data zone and a lead-out zone allocated in the inner-to-outer radius direction. The data zone is provided with an inner spare area (ISA) and an outer spare area (OSA) respectively disposed at the inner and outer radiuses to replace defective areas, and a user data area provided between the spare areas to record user data therein.

If a defective area is generated in the user data area while data is recorded on the rewritable Blu-ray disc (BD-RE), data is transferred from the defective area to the spare area and is recorded in a portion of the spare area. This portion of the spare area is known as a replacement area for replacing the defective area. Additionally, position information related to the defective area, that is, position information on the defective area and on the corresponding replacement area is recorded in defect management areas (DMA1, DMA2, DMA3, and DMA4), which are provided in the lead-in/out zones, to perform defect management. The BD-RE has a cluster as a minimal recording-unit. One cluster has a total of 32 sectors, and one sector has 2048 bytes.

Since rewriting can be performed in any area of the BD-RE, the entire area of the disc can be randomly used irrespective of a specific recording manner. Also, since the defect management information can be written, erased and rewritten in the defect management areas (DMAs), it does not matter that the size of the defect management area is small. In particular, the BD-RE allocates and uses 32 clusters for each of the defect management areas (DMAs).

On the other hand, in a write-once disc such as a BD-WO, writing can be' only made once in a specific area of the disc and thus, the manner of recording is much limited. As such, defect management becomes one of the important matters when data is to be recorded on a high-density write-once disc such as a BD-WO. Accordingly, the write-once disc requires a management area to record therein information on defect management and on disc management. In this regard, the write-once optical disc requires a larger management area for recording information on the defect management and on the disc use state due to its unique 'write-once' characteristic.

However, a unified standard satisfying the above requirements is not available for a write-once disc such as a BD-WO. Further, any standard related to presently declared write-once optical discs cannot solve the above drawbacks.

WO 2004/029941 relates to a write-once recording medium. The document shows that a specific status flag is recorded in TDMA before finalization and some other status flags are recorded in DMA after finalization. Specifically, the DDS status flag will be included in the DDS information in the DMA. On the other hand, the TDDS status flag will be included in the TDDS information in the TDMA.

### Disclosure of Invention

Accordingly, the present invention is directed to a recording/reproducing device for recording/ reproducing management information on/from the optical disc that substantially obviate one or more problems due to limitations and disadvantages of the related art.

An object of the present invention is to provide a method and apparatus for separately recording and managing management information on a write-once disc, thereby enhancing the use efficiency of a plurality of temporary disc/defect management areas (TDMAs) provided on the disc.

Another object of the present invention is to provide a method and apparatus for efficiently recording and playing back an optical disc using management information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

These objects are achieved with the features of the claims.

It is to be understood that the following detailed description of the present invention is exemplary end explanatory and is intended to provide further explanation of the invention as claimed.

### Brief Description of Drawings

The accompanying drawings, which are included to provide a further understanding of the invention and are incorporated in and constitute a part of this application, illustrate embodiment(s) of the invention and together with the description serve to explain the principle of the invention.

In the drawings:
FIG. 1 is a schematic view illustrating the structure of a rewritable Blu-ray disc according to a related art;
FIGs. 2A and 2B are views respectively illustrating the Structure of a single-layer write-once optical disc as a reference example and the structure of a dual-layer write-once optical disc according to an embodiment of the present invention;
FIGs. 3A-3E are views illustrating the structure of a TAI and a method for recording and using the TAI for a single-layer write-once optical disc as a reference example and a dual-layer write-once optical disc according to an embodiment of the present invention;
FIGs. 4A-4C are views illustrating the structure of a TAI end a method for recording and using the TAI for a single-layer write-once optical disc as a reference example and a dual-layer write-once optical disc as a reference example;
FIG. 5A is a view illustrating a variety of disc defect management and disc use state information recorded in a TDMA according to an embodiment of the present invention;
FIG. 5B is a view illustrating a structure of a TDDS According to an embodiment of the present invention;
FIGs. 6A and 6B are views illustrating two examples of the contents of a TAI according to an embodiment of the present invention;
FIG. 7 is a block diagram illustrating an optical recording/reproducing apparatus according to an embodiment of the present invention; and
FIG. 8 is a flow chart illustrating an optical recording/playback method using an optical recording/reproducing apparatus according to an embodiment of the present invention.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

For description convenience, a write-once optical disc is exemplified as a write-once Blu-ray disc (BD-WO).

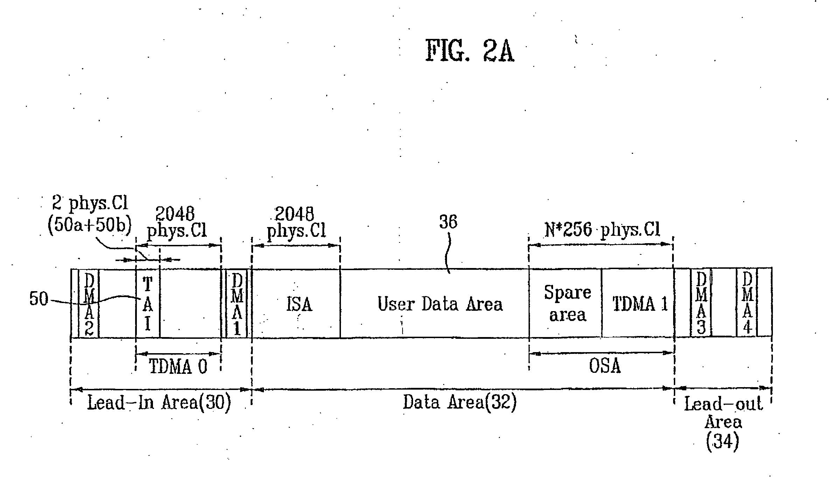

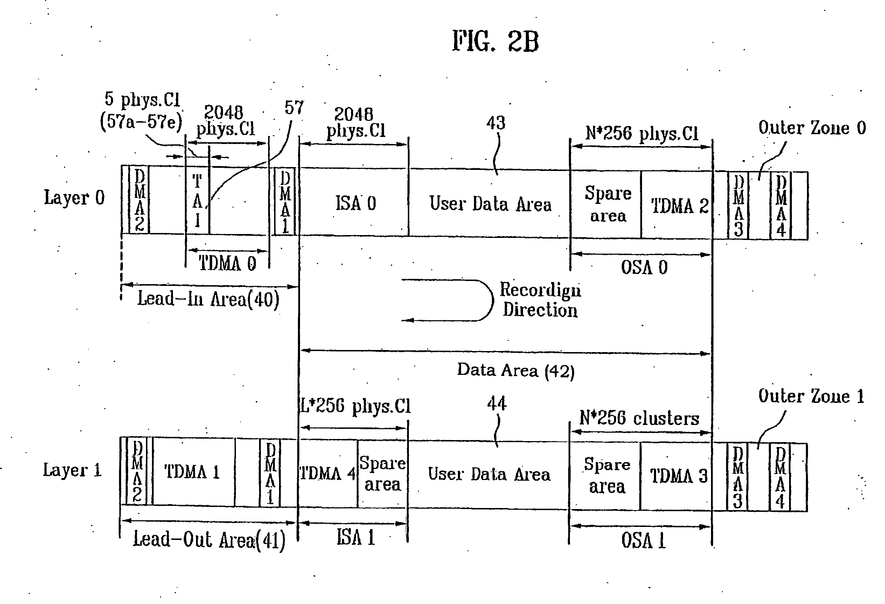

FIGs. 2A and 2B are views illustrating the structure of a write-once optical disc such as a BD-WO and a method for recording management information on the disc. Particularly, FIG. 2A illustrates a single-layer write-once optical disc having one recording layer as a reference example. FIG. 2B illustrates a dual-layer write-once optical disc having two recording layers according to an embodiment of the present invention.

As shown in FIG. 2A, the single-layer optical disc includes a lead-in area 30, a data area 32 and a lead-out area 34 in the inner-to-outer radius direction. The data area 32 includes an inner spare area (ISA) and an outer spare area (OSA) for replacing defective areas, and a user data area for recording user data therein. The write-once optical disc also includes a plurality of temporary disc/defect management areas TDMAs in addition to a plurality of disc/defect management areas (DMAs). The DMAs (DMA1-DMA4) are provided in the lead-in and lead-out areas 30 and 34. The TDMAs store temporarily management information whereas the DMAs store more permanently the management information. For instance, when the disc is to be finalized or closed, the management information stored in a TDMA is transferred to and stored in each of the DMAs. The same information is repeatedly stored four times using the plurality of DMAs.

Here, two TDMAs are provided on the disc, and are referred to as a TDMA0 and a TDMA1. The TDMA0 having a fixed size (for example, 2048 clusters) is located in the lead-in area 30, and the TDMA1 having a variable size is provided in the spare area OSA having a variable size. The TDMA0 should be necessarily provided on the disc, whereas the TDMA1 is selectively allocated with various sizes, appropriately. For instance, the size of the TDMA1 can be ¼ of the size (N*256 clusters) of the OSA such that P = (N*256/4) clusters where P = size of the TDMA1 and N is a positive integer.

Further, the plurality of TDMAs are used in a specific use sequence. For instance, it is used in a sequence of the TDMA0 and then the TDMA1, Identification numbers (TDMA0 and TDMA1) are given to the TDMAs in a serial sequence depending on the use sequence.

According to this reference, management information for managing the plurality of TDMAs is recorded at the head of the TDMA0. This TDMA management information is referred to herein as a TDMA access indicator (TAI), e.g., element 50 in FIG. 2A. The TAI can also be referred to as a TLI (TDMA location indicator). The TAI identifies which TDMA among all the TDMAs to be used in a specific use sequence/order, is an "in-use TDMA". An "in-use TDMA" is a TDMA that is currently being used/accessed or that is currently available for use, among all the TDMAs having the designated use sequence. The TAI also provides information on whether or not the disc is currently closed/finalized.

The TAI allows an initial disc access time to be reduced greatly since the TAI identifies the in-use TDMA and thus, information on the last defect management and on the disc use state can be quickly obtained from the identified in-use TDMA. This is beneficial especially when the disc is initially loaded. Without the TAI, all the TDMAs have to be scanned to determine which TDMA is the in-use TDMA in order to obtain the necessary management information from that in-use TDMA.

In the single-layer write-once disc of FIG. 2A, the TAI 50 is provided by first two head clusters 50a and 50b among the fixed 2048 clusters of the TDMA0. On the other hand, as shown in FIG. 2B, the dual-layer writer-once optical disc includes a first recording layer (Layer 0) and a second recording layer (Layer 1). The first recording layer (Layer 0) includes a lead-in area 40 and an outer zone 0 respectively at the inner and outer radius areas of the disc. The second recording layer (Layer 1) includes a lead-out area 41 and an outer zone 1 respectively at the inner and outer radius areas of the disc. The lead-in and lead-out areas 40 and 41 are known as inner zones.

Further, the disc includes a data area 42 on each of the recoding layers. The data area of the first recording layer (Layer 0) includes inner and outer spare areas ISAO and OSAO, and a user data area 43 therebetween. The data area of the second recording layer (Layer 1) includes inner and outer spare areas ISA1 and OSA1 and a user data area 44 therebetween. The ISAO has a fixed size such as 2048 clusters. The ISA1, OSAO and OSA1 have variable sizes. For instance, the size of the ISA1 may be (L*256) clusters and the size of each of the OSA0 and OSA1 may be (N*256) clusters where L and N are positive integers. The disc also includes a plurality of DMAs (DMA1-DMA4) in the lead-in area 40, the outer zones 0, 1 and the lead-out area 41. The same information is repeatedly recorded in the DMAs for the redundancy purpose.

Furthermore, the disc includes a plurality of TDMAs (TDMA0, TDMA1, TDMA2, TDMA3 and TDMA4) in addition to the DMAs. The TDMA0 and the TDMA1 exist in the lead-in and lead-out areas 40 and 41 (inner zones) and have fixed sizes (e.g., 2048 clusters). The TDMA2, the TDMA3 and the TDMA4 are provided with variable sizes that vary according to the variable sizes of the corresponding spare areas. For instance, the size of each of the TDMA2, TDMA3 and TDMA4 can be ¼ of the size of the corresponding spare area. In one example, the TDMA2 and the TDMA3 each have the size of P = N*256/4 clusters, and the TDMA4 has the size of Q = L*256/4 clusters.

Moreover, all the TDMAs are used in a specific use sequence. For instance, the TDMA0-TDMA4 are used in the sequence of the TDMA0 to TDMA4. This means, whenever recording is desired to a TDMA, the TDMA0 is first used to record therein. When the TDMA0 is full, i.e., fully used up, then the TDMA1 is next used to record therein. When the TDMA1 is full, then the TDMA2 is next used to record therein, and so on. Identification numbers (TDMA0 to TDMA4) are given to the TDMAs in a serial sequence depending on the use sequence.

As in the single-layer write-once disc of FIG. 2A, the dual-layer optical disc of FIG. 2B also includes a TAI 57 at the head area of the TDMA0 preferably located in the lead-in area 40 of the disc. Generally since more TDMAs are provided on the dual-layer optical disc compared to the single-layer disc, providing the TAI on the dual-layer optical disc is of great importance.

In the dual-layer optical disc, the TAI is represented by first five head clusters 57a-57e among the fixed 2048 clusters of the TDMA0.

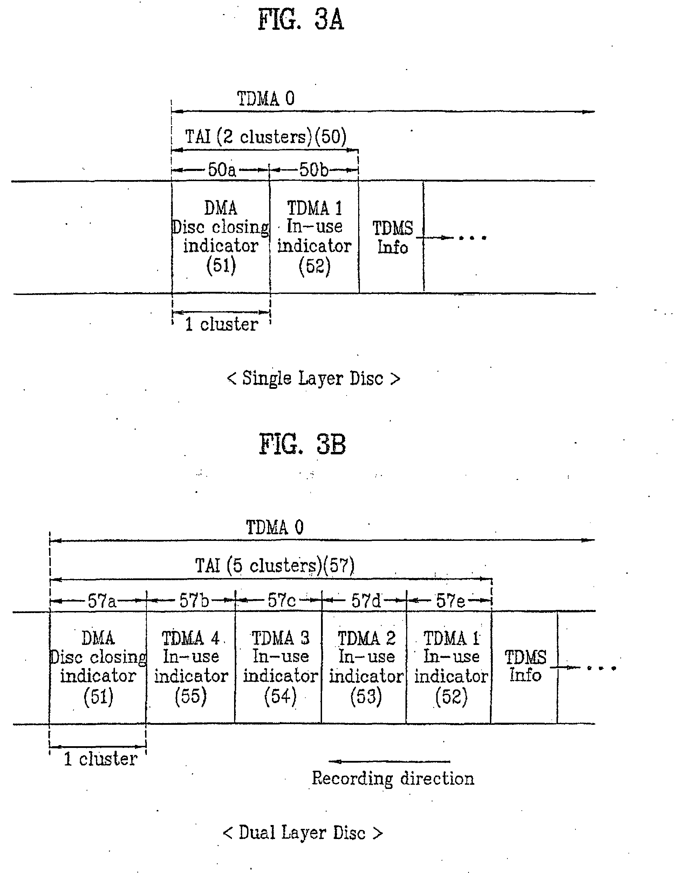

FIGs. 3A to 3B are views illustrating the structure of a TAI . FIG. 3A illustrates the structure and use of a TAI in a single-layer write-once optical disc such as a single-layer BD-WO, and FIG. 3B illustrates the structure and use of a TAI in a dual-layer write-once optical disc such as a dual-layer BD-WO. The structures of the TAI as shown in FIGs. 3A and 3B are applicable to the discs shown in FIGs. 2A and 2B.

As shown in FIG. 3A, in the single-layer write-once optical disc, the TAI 50 is composed of the first two head clusters 50a .nd 50b of the TDMA0 on the disc. One of the two TAI clusters 50a and 50b is used as a DMA disc closing indicator 51 for informing whether or not the optical disc is finalized/closed, and the other one of the two TAI clusters 50a and 50b cluster is used as a TDMA1 in-use indicator 52 for indicating whether or not the TDMAI is the in-use TDMA. In this example, the first head cluster 50a of the TAI 50 functions as the DMA disc closing indicator 51, and the second head cluster 50b functions as the TDMA1 in-use indicator. However, this allocated order can be switched as needed.

The TDMA1 in-use indicator 52 indicates directly whether or not the corresponding TDMA1 is the in-use TDMA. This indication is implemented by providing certain recording in the second cluster 50b of the TAI 50. If the TAI cluster 50b has this certain recording therein, then the TAI cluster 50b is said to be in the 'recorded state'. If the TAI cluster 50b does not have this certain recording therein, then the TAI cluster 50b is said to be not in the recorded state. If the TAI cluster 50b (the TDMA1 in-use indicator 52) is not in the recorded state, it means that the firstly used TDMA0 is the in-use-TDMA. If the TAI cluster 50b is in the recorded state, it means that the next TDMA1 is the in-use-TDMA, which means the firstly used TDMA0 is full, i.e., fully used up, so that there is no recording space in the TDMA0. Accordingly, by examining the recorded/unrecorded state of the TAI cluster 50b, a recording/reproducing apparatus can identify quickly which TDMA can and should be currently used during a data recording operation of the disc. This reduces the disc access time greatly and provides an efficient and effective way to carry data recording operations of the disc.

The DMA disc closing indicator 51 functions to inform whether or not the write-once optical disc is closed/finalized. This can be realized by recording certain data in the first cluster 50a of the TAI. If there is such recording in the first TAI cluster 50a, then the first TAI cluster 50a is said to be in the recorded state and the recorded state of the first TAI cluster 50a means the disc is finalized/closed. If there is no such recording in the first TAI cluster 50a, then the first TAI cluster 50a is said to be not in the recorded state, which in turn means the disc is not yet finalized/closed.

A user or host can request the disc to be closed, or the closing of the disc can be triggered automatically if there is no user data area or management data area to record user data/management data therein. Once the disc is closed, the disc is essentially in a read-only state, thereby making it impossible to record user data subsequently. The closing of the disc is also referred to as finalizing the disc or disc finalization.

If the disc is to be closed as described above, the optical recording/playback apparatus transfers and records the latest management information from the latest TDMA into each of the DMAs. At this time, the first TAI cluster 50a (DMA disc closing indicator cluster 51) is recorded with data (e.g., dummy data or some other data) to be placed in the recorded state. The recorded state of the first TAI cluster 50a indicates that the disc is closed.

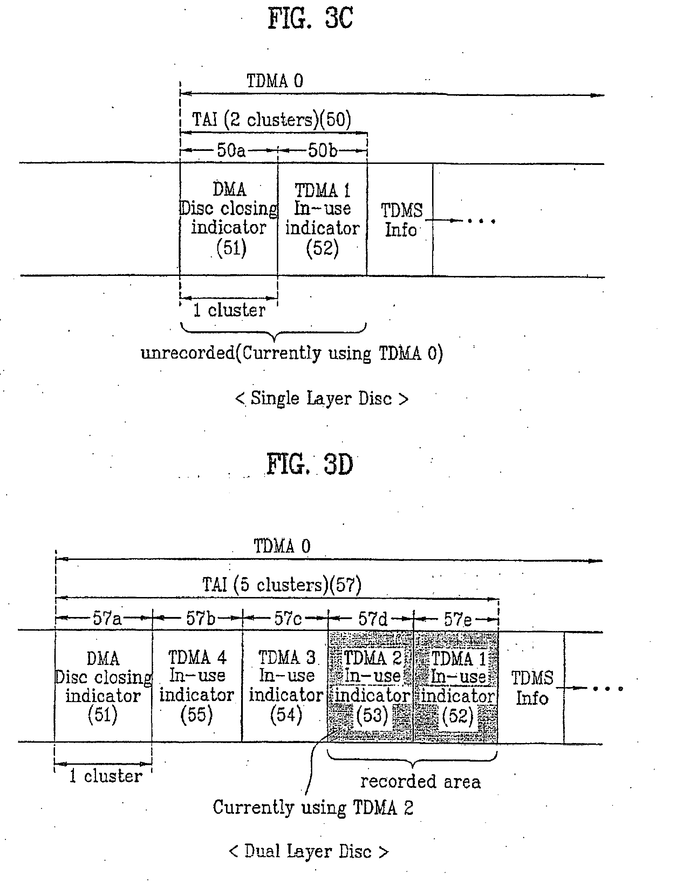

As shown in FIG. 3C, if none of the TAI clusters 50a and 50b are in the recorded state, it means that the in-use-TDMA is the TDMA0 as the first TDMA and the disc is not closed.

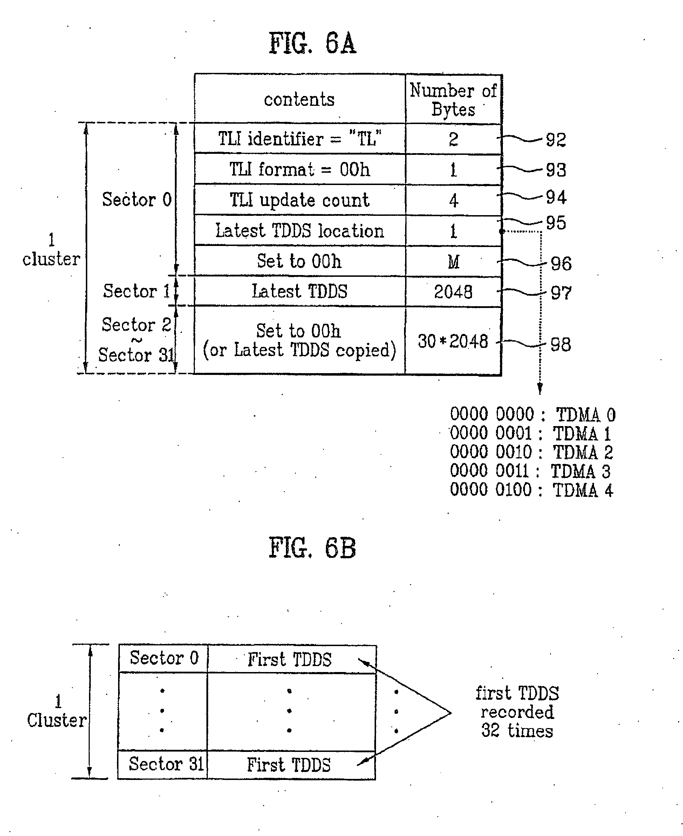

Placing the TAI clusters 50a and 50b in the recorded state is done by recording the TAI clusters 50a and 50b with some data. This can be realized by recording the TAI clusters 50a and 50b with high frequency signals, dummy data, or real data (meaningful data). For instance, the latest temporary disc definition structure (TDDS) information of the corresponding TDMA can be recorded into the corresponding TAI cluster as an example of using real data to place the TAI cluster in the recorded state. Examples of recording such real data in the TAI clusters will be described later reference to FIGs. 6A and 6B.

Accordingly, the TAI includes the disc closing information as well as information on the in-use-TDMA among the TDMAs.

According to an embodiment of the present invention, the dual-layer disc can have up to five TDMAs (TDMA0-TDMA4). Then the TAI for such a disc is composed of the first five head clusters of the TDMA0, where the first head cluster of the TDMA0 functions as the DMA disc closing indicator and the next four head clusters (second to fifth clusters) of the TDMA0 function as the TDMA in-use indicators. The second to fifth clusters of the TDMA0 correspond respectively to the TDMA1-TDMA4 such that they function as the TDMA1-TDMA4 in-use indicators, respectively. Each of these TDMA in-use indicators, as discussed in connection with FIG. 3A, indicates whether or not the corresponding TDMA is the in-use TDMA.

FIG. 3B illustrates an example of the structure of a TAI 57 for the dual-layer write-once disc of FIG. 2B according to an embodiment of the present invention. As shown in FIG. 3B, the TAI 57 is composed of first to fifth head clusters 57a-57e of the TDMA0. The first TAI cluster 57a functions as a DMA disc closing indicator 51. The second to fifth TAI clusters 57b-57e function respectively as TDMA4-TDMA1 in-use indicators 55-52. As such, the second to fifth TAI clusters 57b-57e are used in the order of decreasing address, which is indicated by the `recording direction' arrow. That is, recording in the TAI clusters 57b-57e occurs sequentially from the cluster 57e to the cluster 57b. However, these clusters can be used in the reverse direction.

If none of the second to fifth TAI clusters 57b-57e are in the recorded state, it means that the firstly used TDMA0 is the in-use-TDMA. If the fifth TAI cluster 57e (TDMA1 in-use indicator 52) alone is in the recorded state, it means that the TDMA0 is full and the TDMA1 is the in-use-TDMA. If only the fifth and fourth TAI clusters 57e and 57d are in the recorded state, it means that the TDMA0 and TDMA1 are full and the TDMA2 is the in-use-TDMA. This is illustrated in FIG. 3D. The rest of the in-use indicator clusters are used in the similar manner.

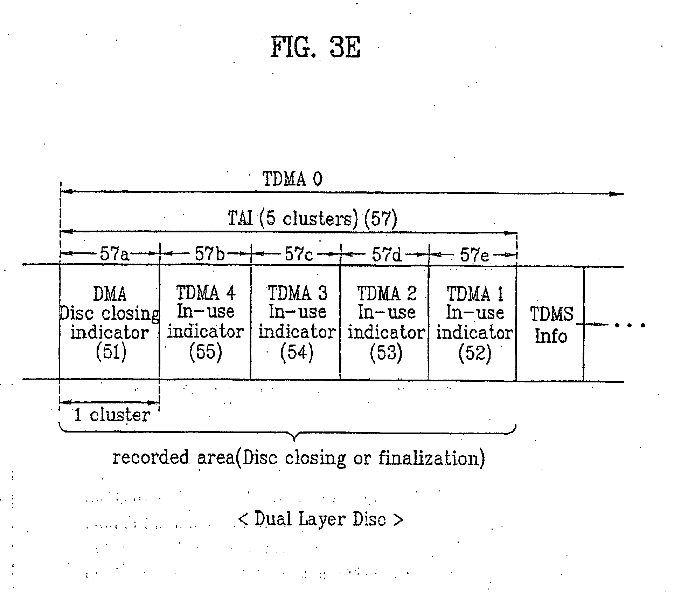

If all the clusters 57a-57e of the TAI 57 are in the recorded state as shown in FIG. 3E, it means that the current disc is closed, and no data can now be recorded on any area of the disc. Thus, only a reproduction of the disc may be allowed.

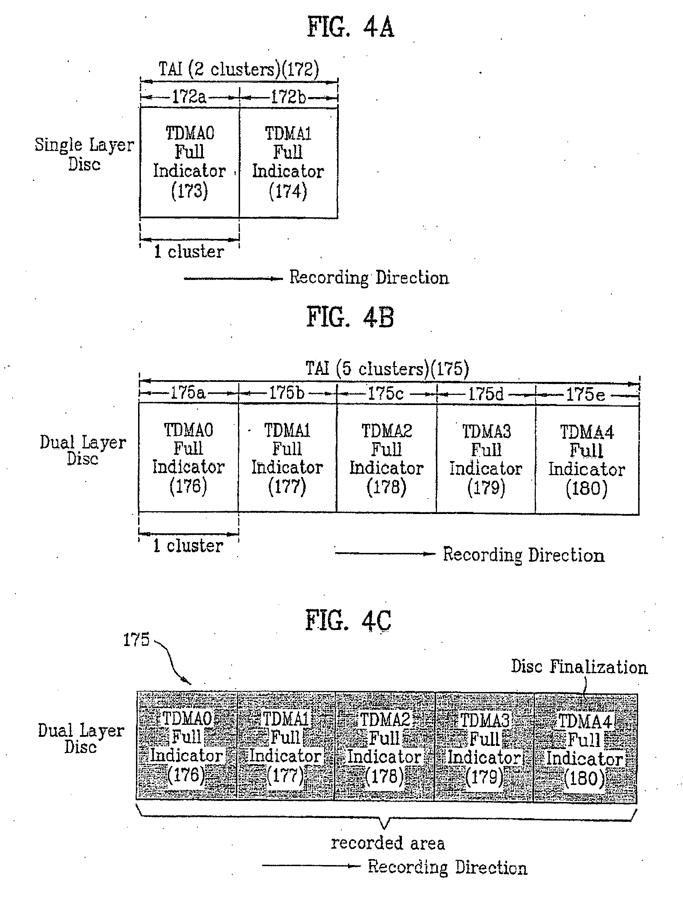

FIGs, 4A to 4C are views illustrating the structure of a TAI as a reference example FIG. 4A illustrates the structure and use of a TAI in a single-layer write-once optical disc such as a single-layer BD-WO, and FIGs. 4B and 4C illustrate the structure and use of a TAI in a dual-layer write-once optical disc such as a dual-layer BD-WO. The structures of the TAI as shown in FIGs. 4A-4C are applicable to the discs and TAI (57) shown in FIGs. 2A and 2B.

In this reference, the TAI indicates which TDMA is the in-use TDMA by indicating which TDMA(s) are full. In the example of FIGs. 4A-4C, assume that the TDMAs are used sequentially from the TDMA0 to the TDMA1 (single-layer disc), or to the TDMA4 (dual-layer disc) as discussed, above. Also the TAI is used in a sequence starting from the TAI cluster having a low PSN to the TAI cluster having a high PSN.

As shown in FIG. 4A, in the example of the single-layer disc, two clusters 172a and 172b are allocated for a TAI 172. The first and second TAI clusters 172a and 172b function respectively as a TDMA0 full indicator 173 and a TDMA1 full indicator 174. Accordingly, if only the TDMA0 is full, the first TAI cluster 172a (TDMA0 full indicator 173) alone is indicated as being in the recorded state. This means that the TDMA1 is the in-use TDMA and can be used. If the first TAI cluster 172a is not in the recorded state, it means that the TDMA0 is not yet full and is available for use. That is, the TDMA0 is the in-use TDMA and can be used. If both the first and second TAI clusters 172a and 172a are in the recorded state, then the TDMA0 and TDMA1 are all full, which means there is no TDMA available for recording management information and the disc is closed/finalized.

As shown in FIG. 4B, in the dual-layers write-once disc, first through fifth clusters 175a-175e are allocated for a TAI 175 and are recorded sequentially in that order in this example. The first to fifth cluster 175a-175e correspond to the TDMA0 to TDMA4, respectively, and function as TDMA0-TMDA4 full indicators 176-180, respectively. Each TAI cluster indicates whether or not the corresponding TDMA if full.

Accordingly, for instance, If no TAI cluster is in the recorded state, it means that the TDMA0 is the in-use TDMA. If only the first TAI cluster 175a is in the recorded state, it means that the TDMA0 is full and the in-use-TDMA is the TDMA1. If only the first and second TAI clusters 175a and 175b are in the recorded state, it means that the TDMA0 and TDMA1 are fully used and the TDMA2 is currently available for use. If all five TAI clusters 175a-175e are in the recorded state as shown in FIG. 4C, it means that the TDMA0 to the TDMA4 are all fully used up and there is no usable TDMA. in this case, since the corresponding disc has no area for recording the TDMS information therein, the disc is finalized/closed.

In the reference shown in FIGs 4A-4C, the TDMA full indicators of the TAI can be used to determine whether or not the disc is finalized/closed and thus can function also as the disc closing indicator. For instance, if the TAI cluster 174 (TDMA1 full indicator) in the example of FIG. 4A is in the recorded state, it means that the disc is closed/finalized. In the example of. FIG. 4C, if the TAI cluster 180 (TDMA4 full indicator) is in the recorded state, it means that the disc is closed/finalized.

The TAI clusters shown in FIGs 3A-4C can be used sequentially in the order of decreasing address or increasing address. However, it may be desirable that the recording of the TAI clusters is performed in a sequence starting from the cluster having a high PSN (Physical Sector Number) to the cluster having a lower PSN, as shown in FIG. 3B. This prevents interference with an OPC (Optimum Powder Calibration, not shown) disposed in the inner radius direction adjacently to the TDMA0.

According to the present invention, since the recording/reproducing apparatus checks for a recorded state within the TAI to determine the location of the in-use-TDMA if the disc is loaded, the recording/reproducing apparatus can quickly move to a start location of the in-use-TDMA to read the lastly recorded TDMS (temporary disc management structure) information therefrom, thereby initially obtaining a variety of initialization information for playback. However, if there is no TAI, the recording/reproducing apparatus has to scan all TDMAs beginning from the TDMA0 to search for an available TDMA. This is a drawback because a long disc access time is needed for initial playback. Thus the present invention solves the above drawback effectively by providing and using the TAI. Moreover, the DMA disc closing indicator of the TAI quickly indicates whether or not any recording can be made to the disc.

According to an embodiment of the present invention, if the single-layer write-once disc has more than two TDMAs or if the dual-layer write-once disc has a certain number of TDMAs, then the total number of TAI clusters present in the TAI as the TDMA in-use indicators changes according to the total number of TDMA present on the disc. For instance, if there is an X number of TDMAs on the disc, then there is an (X-1) number of TAI clusters that function as the TDMA in-use indicators. Each of such TAI clusters would correspond to one of the TDMAs, generally excluding the first TDMA (TDMA0), in the order of the TDMA use sequence.

The TAI 50, 57, 172, 175 is located at the head of the TDMA0 located in the lead-in area of the single layer or dual-layer disc as shown in FIGs. 2A and 2B. However, any location of the TAI on the disc is acceptable if it is located within an area which a recording/reproducing apparatus can initially recognize as the management area. In this regard, the data area of the disc may be excluded. For instance, the TAI can alternatively be provided at the end portion of the TDMA0. As another alternative, the TAI can be provided within one, some or each of the DMAs of the single-layer/dual-layer write-once disc.

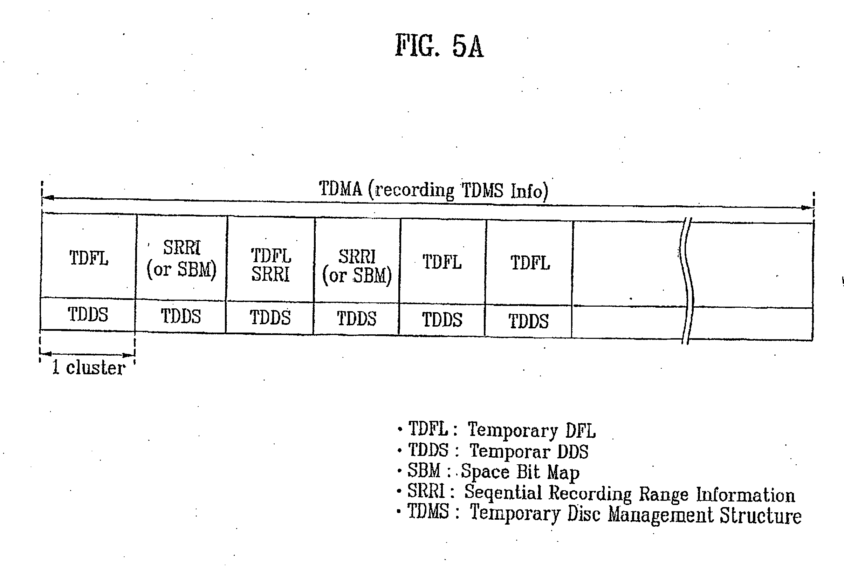

FIG. 5A illustrates a variety of information on the disc defect management and on the disc use state, where this information is recorded in the TDMAs. Whenever recording is performed on the disc, the recording is generally performed by more than one cluster, a cluster being generally a minimal recording-unit. Various disc management information recorded in the TDMA (e.g., TDM0, TDMA1, TDMA2, TDMA3, or TDMA4) is collectively referred to herein as TDMS (temporary disc management structure) information. The TDMS information can be changed or added depending on a standard.

As shown in FIG. 5A, the TDMS information includes, but is not limited to, a Temporary Defect List (TDFL) for recording disc defect management information, a Sequential Recording Range Information (SRRI) applied in a sequential recording mode as information for representing the disc use state, a Space-Bit Map (SBM) applied in a random recording mode, and a Temporary Disc Definition Structure (TDDS) information including recent location information of the TDFL and the SRRI (or SBM). The SRRI and the SBM may not be concurrently used, and either the SRRI or SBM is recorded on the disc depending on the recording mode.

As an example, in the contest of the disc structure shown in FIGs. 2A and 2B, each of the TDMAO ∼ TDMA4 includes one or more TDFLs/SBMs/SRRIs each recorded with a TDDS in one cluster at each recording/updating time, as shown in FIG. 5A. That is, each recording of a TDFL/SBM/SRRI with a TDDS is allotted one cluster. Generally, the last sector of each such cluster is designated to store therein the TDDS information as shown in FIG. 5A. However, the first sector, instead of the last sector, of each such cluster can also be used to store the TDDS information.

The TDDS information includes general disc record/playback information, and is generally always checked at the time of loading the disc in the record/playback apparatus since it includes pointer information for indicating the recent locations of the TDFL and the SRRI (or SBM) as described above. According to the disc use state, the TDDS information is continuously updated and the updated TDDS information is written in the TDMA at each update/recording time. Thus, the last TDDS in the latest TDMA used should be checked to access a variety of management information on a current disc use state.

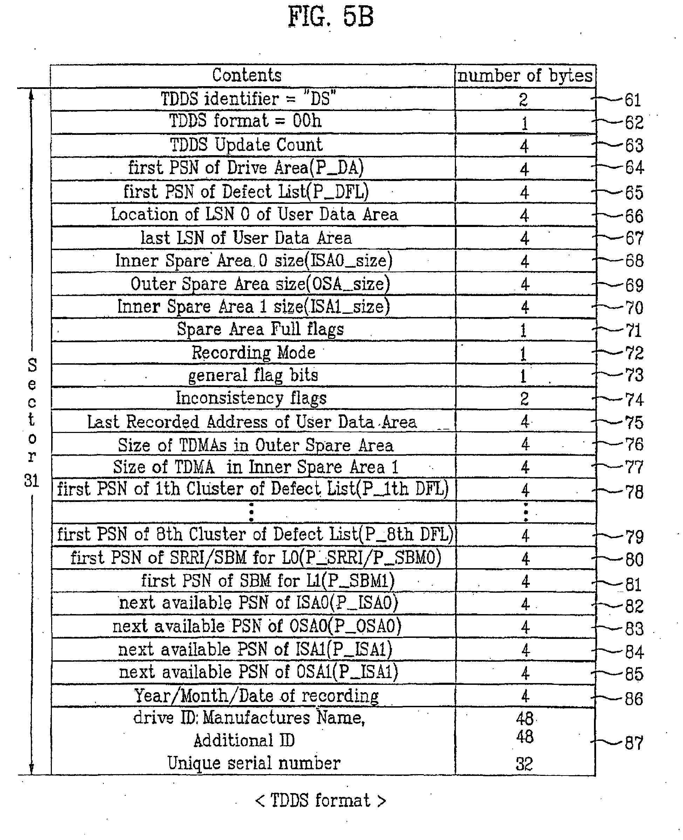

FIG. 5B is a view illustrating the structure of a TDDS according to an embodiment of the present invention. This structure can be applied to any disc structure having a TDDS therein. Referring to FIG. 5B, a variety of information recorded in the TDDS includes, but is not limited to: a TDDS identifier" field 61 and a "TDDS format" field 62 for distinguishing a property of the TDDS; a "TDDS Update Count" field 63 for indicating update times of the TDDS; a "first PSN of Drive Area" field 64 for recording a variety of drive information; a "first PSN of Defect List" field 65 for indicating a first physical sector number of the defect list in case where the disc is closed; a "Location of LSN 0 of User Data Area" field 66 (LSN = last sector number) and a "last LSN of User Data Area" field 67 for indicating a start and an end of the user data area; an "Inner Spare Area 0 size" field 68, an "Outer Spare Area size" field 69 and an "Inner Spare Area 1 size" field 70 for indicating the size of the corresponding spare area; a "Spare Area Full flags" field 71 for selectively indicating whether or not the spare areas are fully used (full); a "Recording Mode" field 72 for indicating a disc recording mode such as a sequential recording mode or a random recording mode; a "general flag bits" field 73 for indicating whether or not the write-protection of the disc exists; an "Inconsistency flags" field 74 for indicating an update state of the TDMS information; a "Last Recorded Address of User Data Area" field 75 for indicating a location of the last recorded user data within the user data area; a "Size of TDMAs in Outer Spare Area" field 76 and a "Size of TDMS in Inner Spare Area 1" field 77 for indicating the size of the corresponding TDMA allocated within the spare area; a "First PSN of 1^{st} Cluster of Defect List" field 78 for indicating a first physical sector number of the latest defect list in the latest TDMA area to a "first PSN of 8^{th} Cluster of Deflect List" field 79 for indicating the 8^{th} physical sector number (Defect list generally does not exceed four clusters in the single-layer optical disc and eight clusters in the dual-layer optical disc); a "first PSN of SRRI/SBM for LO" field 80 and a "first PSN of SBM for L1" field 81 for indicating the location of the SRRI (or SBM), which is finally recorded in a sequential or random recording mode; a "next available PSN of ISAO" field 82, a "next available PSN of OSAO" field 83, a "next available PSN of ISA1" field 84, a "next available PSN of OSA1" field 85 for indicating a next available physical sector number in the corresponding spare area; and a "Year/Month/Data of recording" field 86 for indicating a recording time, and a "Drive ID" field 87 for indicating a manufacture company, an additional identification, a serial number and the like.

Some of these fields of the TDDS can be non-variable fields (not updated). Such fields may include the "TDDS identifier" field 61, the "Inner Spare Area 0, 1 size" fields 68-70, the "Outer Spare Area size" field 69, the "Recording Mode" field 72, the "Size of TDMAs in Outer Spare Area" field 76, the "Size of TDMAs in Inner Spare Area 1" field 77 among the TDDS information discussed above. For description convenience, information included in these non-variable fields is called "fixed management field" information. Since the fixed management field information is the same no matter which TDDS is played-back, the entire structure of the disc, the recording manner and the like can be determined through this information.

Further, some of the fields of the TDDS may need to be continuously updated according to a need. Such fields may include the "first PSN of 1^{st} Cluster of Defect List"... "first PSN Of 8^{th} Cluster of Defect List" field 78...79, the "next available PSN of ISAO" field 82, the "next available PSN of OSAO" field 83, the "next available PSN of ISA1" field 84, and the "next available PSN of OSA1" field 85. For description convenience, information included in these variable fields is called "variable management field" information.** Accordingly, if the TDDS information is recorded in the TAI and is played-back according to an embodiment of the present invention, the entire disc structure, the recording manner/mode and the like can be firstly determined through the fixed management field information. For instance, a corresponding TDMA is easily accessed through the size information of the TDMA area included in the fixed management field information.

FIGs. 6A and 6B illustrate two examples of different contents of the TAI cluster according to an embodiment of the present invention. Although FIGs. 6A and 6B show one TAI cluster, each cluster of the TAI discussed herein can have the same or similar content structure.

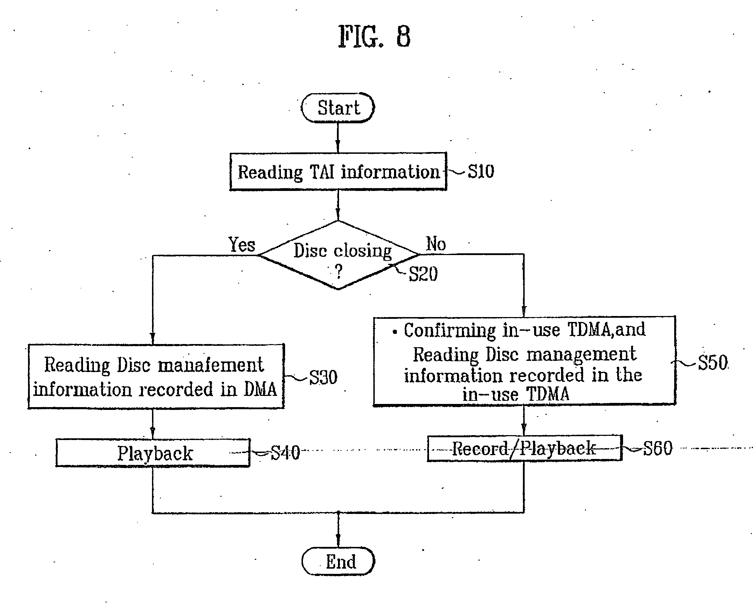

Particularly; FIGs. 6A and 6B are examples of recording certain real data into the TAI clusters to selectively place the TAI clusters into the recorded state. Some or all of such real data recorded in the TAI can be directly used to indicate whether or not the TAI cluster(s) is in the recorded state so as to identify the in-use TDMA as discussed above. The use of such real data has an advantage in that additional relevant information can be provided by the TAI in addition to the indication of the current in-use TDMA. It should be noted, however, that dummy data or any other designated signals can be recorded into the TAI clusters to indicate the recorded/unrecorded state of the TAI clusters. The TAI content structures of FIGs. 6A and 6B are applicable to the TAI and disc structures shown in FIGs. 2A-5B and the methods of FIG. 8.

According to one example as shown in FIG. 6A, the TAI cluster, which corresponds to a particular TDMA (or latest TDMA in case that the TAI cluster indicates the disc closing) as discussed above, includes the latest TDDS information associated with the TDMA corresponding to the TAI cluster, in addition to the information indicating whether the corresponding TDMA is the in-use TDMA. In case where the last TDDS is recorded in the last cluster of each TDMA, the TDMA including the latest TDDS and the in-use-TDMA can be different from each other, which in turn can cause errors when accessing the disc. By providing the additional information in the TAI as in FIG. 6A, such an error can be prevented.

A detailed description of this situation is as follows by referring to FIG. 6A. First, assume that the TAI is recorded in cluster units, a cluster being the minimal recording-unit. In the first sector (Sector 0) of the TAI cluster having 32 sectors, there exist an identification field 92 ("TAI identifier") for allowing the recognition of the TAI information, a TAI format information field 93 ("TAI format") related with a version of the current disc, and a TAI update count field 94 ("TAI update count") for increasing a count value by 1 whenever the TAI is updated. The update count field 94 can also be used even as the information for indicating how many clusters may be present within the TAI. Further, there exists a TDDS location field 95 ("Latest TDDS location") for providing information on the TDMA in which the latest TDDS information is located.

The remaining area 96 of the first sector (Sector 0) of the TAI cluster is used to indicate the recorded or unrecorded state of the TAI cluster by using a predetermined value (for example, setting the field to "OOh"). For instance, if the remaining area 96 of Sector 0 of the TAI cluster has certain designated recording as discussed above, then the TAI cluster is said to be in the recorded state to indicate the in-use status of the corresponding TDMA or the disc closing as discussed above in connection with FIGs. 3A-4C.

The TDDS location field 95 in the first sector (Sector 0) of the TAI cluster identifies a TDMA in which the latest TDDS information is recorded irrespective of whether or not that TDMA is fully used up. For example, the values of this field 95 can be defined so that "0000 0000b" means the latest TDDS exists in the TDMA0, "0000 0001b" means the latest TDDS exists in the TDMA2, "0000 0011b" means the latest TDDS exists in the TDMA3, and "0000 0100b" means the latest TDDS exist in the DMA4. Other examples are possible. Accordingly, in the example of FIG. 3C, if the second cluster 50b of the TAI 50 alone is in the recorded state (e.g., the area 96 of the TAI cluster 50b in FIG. 3C is in the recorded state) and the TDDS location field 95 (i.e., of the second TAI cluster 50b in FIG. 3C) has a value of "0000 0000b", it means the usable TDMA is the TDMA, but the last updated TDDS (latest TDDS information) is located within the TDMA0 on the disc.

In addition, the latest TDDS information is recorded into a TDDS information field 97 ("Latest TDDS") of the second sector (Sector 1 of the TAI cluster). As a result, the TAI can be utilized even for recovering the latest TDDS information directly. This is advantageous since, even if the latest TDDS information recorded in the latest TDMA as part of the TDMS information is damaged, the important TDDS information will not be lost since it can recovered from the TAI recorded in the TDMA0. Some or all of the remaining sectors (98) of the TAI cluster can have a copy of the latest TDDS information stored in the TDDS information field 97. Each TDDS information is recorded in one sector size. Thus, for instance, if 3 sectors of the TAI cluster are each recorded with the same latest TDDS information, this means that the latest TDDS information is stored three times in the TAI.

The latest TDDS information stored in the field 97 of the TAI cluster can be the last TDDS information or the first TDDS information. For instance, if the TDMA corresponding to the TAI cluster becomes the in-use TDMA, then recording in the field 96 is made to indicate that the corresponding TDMA is currently in use. At this time, the first TDDS information recorded in the corresponding TDMA is copied and recorded into the TDDS information field 97 of the TAI cluster as the latest TDDS information. The first TDDS information is recorded in the field 97 because the corresponding TDMA is still in use and is not full at that time. Thus, according to a time point when the TAI is updated, the latest TDDS information recorded in the TAI can be the last TDDS recorded within the corresponding TDMA (e.g., when the corresponding TDMA is full), or can be the first TDDS recorded within the in-use-TDMA (i.e., when the corresponding TDMA is currently available for use).

As another example, the latest TDDS information can be copied up to 32 times into the TAI cluster. Any remaining sector of the TAI cluster can be set to a certain value such as 00h if it is not used. Since each TDDS information recording is allotted with one sector size, this means the entire TAI cluster can be recorded with the same latest TDDS information up to 32 times as shown in FIG. 6B. In this example, the first TDDS information recorded in the corresponding TDMA is recorded 32 times in the TAI cluster. And the recording of the first TDDS information in the TAI cluster is directly used as the TDMA in-use/disc closing indicator of the TAI cluster. This is an example of using the recording of real data (such as the TDDS information) in the TAI cluster to selectively indicate whether or not the TAI cluster is in the recorded state. Thus, the TAI cluster, not only indicates which TDMA is the in-use TDMA or whether or not the disc is closed, but also provides the latest TDDS information associated with the corresponding TDMA.

Accordingly, the optical recording/playing-back apparatus can examine the TAI from the loaded disc to determine whether or not the disc is closed. If the disc is closed, the last TDDS information of the disc can be obtained by reading the latest TDDS information recorded in the TAI cluster. Further, the TAI can be examined to identify the location of the in-use TDMA since it indicates which TDMA is currently the in-use TDMA. Further, by accessing and using the "fixed management field" information within the TDDS information recorded in the corresponding TAI cluster, the spare areas can be allocated or not allocated on the disc, and the allocation size of the spare areas and/or TDMAs may be obtained.

After that, the recording/playing-back apparatus can move a pickup to the in-use-TDMA area to perform the scan from the beginning of the corresponding TDMA area, thereby confirming the last recorded TDDS. Therefore, the "variable management field" information recorded in the TDDS can be confirmed and the confirmed information can be used to allow the reading of the last TDFL, SRRI (or SBM), thereby reading information on the entire disc recording state and defect areas.

Hereinafter, the optical recording and playback method and apparatus using the TAI according to an embodiment of the present invention is discussed.

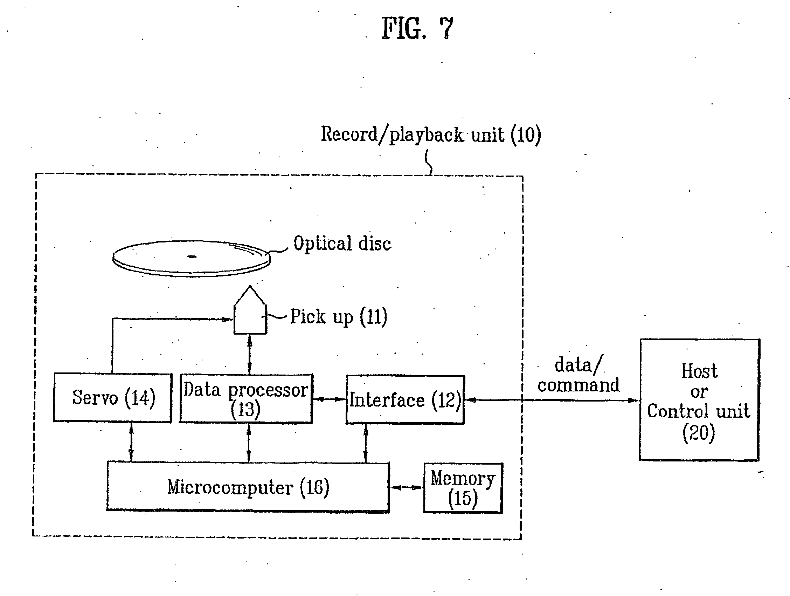

FIG. 7 illustrates a recording/reproducing apparatus according to an embodiment of the present invention. The methods of the present invention can be implemented by the apparatus of FIG. 7 or other suitable device/system. The recording/reproducing apparatus includes a recording/reproducing unit 10 for performing reproduction and/or recording from/on an optical disc, and a control unit (or host) 20 for controlling the recording/reproducing unit 10. The control unit 20 sends a record command or a reproduce command for a specific area on the disc to the reproducing unit 10. The recording/reproducing unit 10 performs the recording/reproduction in the specific area according to the command of the control unit 20. The recording/reproducing unit 10 can employ an optical drive.

The recording/reproducing unit 10 can include an interface unit 12 for performing communication with an external device such as the control unit 20; a pickup unit 11 for directly recording or reproducing data to/from the optical disc; a data processor 13 for receiving the reproduction signal from the pickup unit 11 to convert the receive signal into appropriate signal values, or for modulating a to-be-recorded signal into an appropriate recording signal for the optical disc; a servo unit 14 for controlling the pickup unit 11 to precisely read the signals from the optical disc, or to precisely record the signals on the optical disc; a memory 15 for temporarily storing a variety of information including the management information and data; and a microprocessor 16 for controlling the operations and structural elements within the unit 10.

A description of a disc playback method using the TAI in a recording/reproducing apparatus according to any embodiment of the present invention is now provided referring to FIG. 8.

As shown in FIG. 8, if the write-once optical disc is loaded in the optical recording/reproducing apparatus, the apparatus moves to the TDMA0 of the disc to read the TAI (S10). It is determined whether or not the loaded disc is closed by examining the TAI information, particularly, the DMA disc-closing indicator of the TAI (S20).

At this time, if it is determined that the disc is closed since the DMA disc closing indicator cluster is in the recorded state, the apparatus moves the pick-up unit to a designated area (e.g., a DMA) to read the last recorded management information (S30). In case where the disc is closed as described above, recording on the disc can no longer be performed. Therefore, the management information is utilized to perform the playback of data (S40). On the other hand, if it is determined that if the disc is not closed, the recording/reproducing apparatus moves to the in-use-TDMA, indicated by the TDMA in-use indicator cluster(s) of the TAI to read the management information including the latest TDDS information recorded in the in-use-TDMA (S50). Such TDDS information may also be obtained from the TAI. Also the recording/reproducing apparatus first reads the "fixed management field" information from the TDDS recorded in the TAI to obtain information on the entire disc structure and the like and then, can also move to the currently in-use TDMA area to read the latest "variable management field" information,

### Industrial Applicability,

As described above, after the last management information of the disc is read, the data is recorded or played-back according to a user's selection or as needed (S60).

Applying the method of FIG.8 to the apparatus of FIG. 7, if the optical disc is loaded, the recording/reproducing unit 10 obtains a variety of recorded disc information from the loaded optical disc. Specifically, if the loaded optical disc is the write-once optical disc, for example, BD-WO, the microcomputer 16 accesses the TAI and obtains the TAI information recorded in the TDMA0 area in order to determine whether or not the loaded disc is closed and to obtain the location of the in-use-TDMA.

If the disc is determined to be closed in view of the TAI information, the recording can be no longer performed on the disc. Therefore, the recording/reproducing unit 10 performs the disc playback through a playback command of the control unit 20 under the control of the microcomputer 16. If the disc is not closed in view of the TAI information, the location of the in-use-TDMA to obtain the last TDMS information recorded in the in-use TDMA is obtained from the TAI, and the obtained TDMS information is utilized to perform the playback by the recording/reproducing unit 10 under the control of the microcomputer 16 according to a playback command of the control unit 20.

On the other hand, a method for recording the TAI using the optical recording/reproducing apparatus of FIG. 7 according to an embodiment of the present invention is described as follows.

The microcomputer 16 within the playback unit 10 records the TDMS information to the plurality of TDMAs in a specific use sequence. For example, the TDMA0 first is used. If the TDMA0 is fully used up, the TDMA1 in-use indicator cluster of the TAI within the TDMA0 is changed to be in the recorded state to indicate that the TDMA1 is currently in use. The recorded state of the TDMA1 in-use indicator cluster can be realized by recording the recorded TDDS information already recorded in the TDMA0 or some other designated data as discussed above.

In case where there is no longer any cluster to be recorded or the disc is closed by a closing command of the control unit 20 according to a user's request or like while recording is performed, the microcomputer 16 controls to transfer and record the latest TDMS information, which is recorded in the latest TDMA, into each of the DMAs (duplicate recording for redundancy purpose), and controls to change the DMA disc closing indicator cluster of the TAI to be in the recorded state.

When the disc is in an idle state or in a disc eject state after the disc recording is all finished, the location of the in-use-TDMA is determined such that the above operation can change the specific cluster within the corresponding TAI to be in a batch record state.

As described above, the present invention has an advantage in that the write-once optical disc is efficiently used through a method for recording and using the TAI including both the TDMA in-use indicator(s) and the disc closing indicator. By accessing the TAI initially, the identity of the in-use TDMA at that time can be quickly obtained, information on whether or not the disc is closed can be easily obtained, and management information such as the latest TDDS information can also be easily obtained.

It will be apparent to those skilled in the art that various modifications and variations can be made in the present invention. Thus, it is intended that the present invention covers the modifications and variations of this invention provided they come within the scope of the appended claims and their equivalents.

## Claims

1. A recording device for recording management information on a write-once recording medium, the recording medium including a lead-in area, a data area having a spare area and a user data area, and a lead-out area, the lead-in and lead-out areas including a plurality of defect management areas for storing management information when the recording medium is to be closed, the device comprising;
a pickup (11) configured to write/read data onto/from the recording medium; and
a microcomputer operatively coupled to the pickup (11) and configured to control the pickup (11) to record data onto a first indicator corresponding to a temporary disc/defect management area being in use when the temporary disc/defect management area is in use for recording management information, wherein the recording medium includes a plurality of first indicators, located in a first temporary disc/defect management area provided in the lead-in area, for indicating which temporary disc/defect management area is in use, the plurality of first indicators corresponding respectively, except the first temporary disc/defect management area, to a plurality of temporary disc/defect management areas of the recording medium being used one-by-one in a designated use sequence for storing management information until the recording medium is closed, each temporary disc/defect management area being fully used up except the first and second indicators in the first temporary disc/defect management area before a next temporary disc/defect management area is used; and configured to control the pickup (11) to record data onto a second indicator located in the first temporary disc/defect management area when closing the recording medium to indicate that the recording medium is closed, and wherein the first and second indicators are located in a head portion of the first temporary disc/defect management area.

2. The device of claim 1, wherein the microcomputer is configured to control the pickup (11) to record, onto the first indicator corresponding to the temporary disc/defect management area being in use, a copy of temporary disc definition structure information recorded first in the temporary disc/defect management area being in use, the temporary disc definition structure information indicating at least a location of a latest defect list in a temporary disc/defect management area used latest.

3. The device of claim 1, or 2, wherein the microcomputer (16) is configured to control the pickup (11) to record, onto each of the defect management areas, a copy of latest management information recorded in a temporary disc/defect management area used latest when closing the recording medium.

4. The device of one of claims 1 to 3, wherein the microcomputer is configured to determine which temporary disc/defect management area is in use based on whether or not each of the first indicators has data recorded thereon.

5. The device of one of claims 1 to 4, wherein the recording device further comprises:
a data processor (13) configured to modulate a signal into a recording signal or convert a signal from the pickup (11) into a signal value;
a servo (14) configured to control the pickup (11) to record/read a signal to/from the recording medium; and
a memory (15) configured to temporarily store data associated with the recording medium, wherein the microcomputer (16) is configured to control operations of the data processor (13), the servo (14) and the memory (15).

6. A system comprising:
a recording device according to claim 1; and
a host (30), operatively coupled to a microcomputer (16) of the recording/reproducing device, configured to transmit to the microcomputer (16) a record command for recording data onto the recording medium.

7. A reproducing device for reproducing management information recorded on a write-once recording medium, the recording medium including a lead-in area, a data area having a spare area and a user data area, and a lead-out area, the lead-in and lead-out areas including a plurality of defect management areas for storing management information when the recording medium is to be closed, the reproducing device comprising:
a pickup (11) configured to read data from the recording medium; and
a microcomputer (16) operatively coupled to the pickup (11) and configured to determine whether or not the recording medium has been closed based on whether or not a second indicator has data recorded thereon, the second indicator located in a first temporary disc/defect management area provided in the lead-in area for indicating whether or not the recording medium is closed, and control the pickup (11) to read management information recorded in a defect management area if the recording medium has been closed; and configured to determine which temporary disc/defect management area is in use for recording management information based on whether or not each of a plurality of first indicators has data recorded thereon, the plurality of first indicators located in the first temporary disc/defect management area for indicating which temporary disc/defect management area is in use, and control the pickup (11) to read management information recorded in a temporary disc/defect management area determined to be in use if the recording medium has not been closed, wherein the plurality of first indicators correspond respectively, except the first temporary disc/defect management area, to a plurality of temporary disc/defect management areas of the recording medium being used one-by-one in a designated use sequence for storing management information until the recording medium is closed, each temporary disc/defect management area being fully used up except the first and second indicators in the first temporary disc/defect management area before a next temporary disc/defect management area is used, and wherein the first and second indicators are located in a head portion of the first temporary disc/defect management area.

8. The device of claim 7, wherein a first indicator contains a copy of temporary disc definition structure information recorded first in a corresponding temporary defect/disc management area once the corresponding temporary defect/disc management area is in use, the temporary disc definition structure information indicating at least a location of a latest defect list within a temporary defect/disc management area used latest.

9. The device of claim 7 or 8, wherein the reproducing device further comprises:
a data processor (13) configured to convert a signal from the pickup (11) into a signal value;
a servo (14) configured to control the pickup (11) to read signals from the recording medium; and
a memory (15) configured to temporarily store information associated with the recording medium, wherein the microcomputer (16) is configured to control operations of the data processor (13), the servo (14) and the memory (15).

10. A system comprising:
a reproducing device according to claim 7; and
a host (20), operatively coupled to a microcomputer (16) of the reproducing device, configured to transmit to the microcomputer. (16) a reproduce command for reproducing data from the recording medium.

11. The device or system of one of claims 1 to 10, wherein the first temporary disc/defect management area is being used first in the designated use sequence.

12. The device or system of one of claims 1 to 11, wherein the second indicator is the first head minimal recording-unit located in the first temporary disc/defect management area.

13. The device or system of one of claims 1 to 12, wherein each of the first indicators has a size of a minimal recording-unit on the recording medium and the first indicators are minimal recording-units starting from the second head minimal recording-unit located in the first temporary disc/defect management area.

## Patentansprüche

1. Aufzeichnungsvorrichtung zum Aufzeichnen von Verwaltungsinformationen auf einem einmal beschreibbaren Aufzeichnungsmedium, wobei das Aufzeichnungsmedium einen Lead-in-Bereich, einen Datenbereich mit einem Reservebereich und einem Benutzerdatenbereich und einen Lead-out-Bereich aufweist, wobei die Lead-in- und Lead-out-Bereiche mehrere Fehlerverwaltungsbereiche zum Speichern von Verwaltungsinformationen, wenn das Aufzeichnungsmedium geschlossen werden soll, aufweisen, wobei die Vorrichtung aufweist:
einen Aufnehmer (11), der zum Schreiben/Auslesen von Daten auf die/aus der Aufzeichnungsvorrichtung geeignet ist, und
einen Mikrocomputer, der wirksam mit dem Aufnehmer (11) verbunden ist und zur Steuerung des Aufnehmers (11) ausgebildet ist, um Daten auf einem einem temporären Datenträger-/Fehlerverwaltungsbereich entsprechenden ersten Indikator aufzuzeichnen, der verwendet wird, wenn der temporäre Datenträger-/Fehlerverwaltungsbereich zur Aufzeichnung von Verwaltungsinformationen verwendet wird, wobei das Aufzeichnungsmedium mehrere erste Indikatoren aufweist, die sich in einem im Lead-in-Bereich vorgesehenen ersten temporären Datenträger-/Fehlerverwaltungsbereich befinden, um anzuzeigen, welcher temporäre Datenträger-/Fehlerverwaltungsbereich gerade verwendet wird, wobei die mehreren ersten Indikatoren jeweils mehreren temporären Datenträger-/Fehlerverwaltungsbereichen des Aufzeichnungsmediums, mit Ausnahme des ersten temporären Datenträger-/Fehlerverwaltungsbereichs, entsprechen, die nacheinander in einer bestimmten Verwendungsabfolge zum Speichern von Verwaltungsinformationen verwendet werden, bis das Aufzeichnungsmedium geschlossen ist, wobei jeder temporäre Datenträger-/Fehlerverwaltungsbereich mit Ausnahme des ersten und zweiten Indikators im ersten temporären Datenträger-/Fehlerverwaltungsbereich vollständig genutzt wird, bevor ein nächster temporärer Datenträger-/Fehlerverwaltungsbereich verwendet wird, und der zur Steuerung des Aufnehmers (11) ausgebildet ist, um Daten auf einem zweiten Indikator aufzuzeichnen, der sich im ersten temporären Datenträger-/Fehlerverwaltungsbereich befindet, wenn das Aufzeichnungsmedium geschlossen wird, um anzuzeigen, dass das Aufzeichungsmedium geschlossen wird, und wobei die ersten und zweiten Indikatoren in einem Kopfbereich des ersten temporären Datenträger-/Fehlerverwaltungsbereichs liegen.

2. Vorrichtung nach Anspruch 1, wobei der Mikrocomputer dazu ausgebildet ist, den Aufnehmer (11) zu steuern, auf den ersten Indikator, der dem verwendeten temporären Datenträger-/Fehlerverwaltungsbereich entspricht, eine Kopie von temporären Datenträger-Definitionsstrukturinformationen aufzuzeichnen, die zunächst im verwendeten temporären Datenträger-/Fehlerverwaltungsbereich aufgezeichnet wurden, wobei die temporären Datenträger-Definitionsstrukturinformationen zumindest den Ort der letzten Fehlerliste in einem zuletzt verwendeten temporären Datenträger-/Fehlerverwaltungsbereich angibt.

3. Vorrichtung nach Anspruch 1 oder 2, wobei der Microcomputer (16) dazu ausgebildet ist, um den Aufnehmer (11) zu steuern, auf jeden der Fehlerverwaltungsbereiche eine Kopie der letzten Verwaltungsinformationen aufzuzeichnen, die in einem zuletzt verwendeten temporären Datenträger-/Fehlerverwaltungsbereich aufgezeichnet wurden, wenn das Aufzeichnungsmedium geschlossen wird.

4. Vorrichtung nach einem der Ansprüche 1 bis 3, wobei der Mikrocomputer dazu ausgebildet ist, festzustellen, welcher temporäre Datenträger-/Fehlerverwaltungsbereich verwendet wird, abhängig davon, ob auf jedem der ersten Indikatoren Daten aufgezeichnet sind oder nicht.

5. Vorrichtung nach einem der Ansprüche 1 bis 4, wobei die Aufzeichnungsvorrichtung ferner aufweist:
einen Datenprozessor (13), der dazu ausgebildet ist, ein Signal in ein Aufzeichnungssignal zu modulieren oder ein Signal des Aufnehmers (11) in einen Signalwert umzuwandeln,
eine Servoeinrichtung (14), die dazu ausgebildet ist, den Aufnehmer (11) zu steuern, um ein Signal auf dem Aufzeichnungsmedium aufzuzeichnen bzw. aus dem Aufzeichnungsmedium auszulesen, und
einen Speicher (15), der dazu ausgebildet ist, zum Aufzeichnungsmedium gehörige Daten temporär zu speichern, wobei der Mikrocomputer (16) dazu ausgebildet ist, den Betrieb des Datenprozessors (13), der Servoeinrichtung (14) und des Speichers (15) zu steuern.

6. System mit:
einem Aufzeichnungsgerät nach Anspruch 1 und
einem Host (30), der mit einem Mikrocomputer (16) der Aufzeichnungs-/Wiedergabevorrichtung wirksam verbunden ist und dazu ausgebildet ist, einen Aufzeichnungsbefehl zum Aufzeichnen von Daten auf das Aufzeichnungsmedium an den Mikrocomputer (16) zu übertragen.

7. Wiedergabevorrichtung zur Wiedergabe von auf einem einmal beschreibbaren Aufzeichnungsmedium aufgezeichneten Verwaltungsinformationen, wobei das Aufzeichnungsmedium einen Lead-in-Bereich, einen Datenbereich mit einem Reservebereich und einem Benutzerdatenbereich und einen Lead-out-Bereich aufweist, wobei die Lead-in- und Lead-out-Bereiche mehrere Fehlerverwaltungsbereiche zum Speichern von Verwaltungsinformationen, wenn das Aufzeichnungsmedium geschlossen werden soll, aufweisen, wobei die Wiedergabevorrichtung aufweist:
einen Aufnehmer (11), der dazu ausgebildet ist, Daten aus dem Aufzeichnungsmedium auszulesen, und
einen Mikrocomputer (16), der wirksam mit dem Aufnehmer (11) verbunden ist und ausgebildet ist, zu bestimmen, ob das Aufzeichnungsmedium geschlossen wurde oder nicht in Abhängigkeit davon, ob ein zweiter Indikator darauf Daten gespeichert hat oder nicht, wobei der zweite Indikator in einem im Lead-in-Bereich vorgesehenen temporären Datenträger-/Fehlerverwaltungsbereich liegt, um anzuzeigen, ob das Aufzeichnungsmedium geschlossen ist oder nicht, und den Aufnehmer (11) zu steuern, in einem Fehlerverwaltungsbereich aufgezeichnete Verwaltungsinformationen zu lesen, wenn das Aufzeichnungsmedium geschlossen wurde, und der dazu ausgebildet ist, aus den Aufzeichnungsverwaltungsinformationen zu bestimmen, welcher temporäre Datenträger-Fehlerverwaltungsbereich verwendet wird, in Abhängigkeit davon, ob jeder der ersten Indikatoren Daten darauf aufgezeichnet hat oder nicht, wobei die mehreren ersten Indikatoren im ersten temporären Datenträger-/Fehlerverwaltungsbereich liegen, um anzuzeigen, welcher temporäre Datenträger-/Fehlerverwaltungsbereich verwendet wird, und den Aufnehmer (11) zu steuern, Verwaltungsinformationen zu lesen, die in einem temporären Datenträger-/Fehlerverwaltungsbereich aufgezeichnet wurden, der als in Verwendung bestimmt wurde, wenn das Aufzeichnungsmedium nicht geschlossen wurde, wobei die mehreren ersten Indikatoren jeweils mehreren temporären Datenträger-/Fehlerverwaltungsbereichen des Aufzeichnungsmediums, mit Ausnahme des ersten temporären Datenträger-/Fehlerverwaltungsbereichs, entsprechen, die nacheinander in einer bestimmten Verwendungsreihenfolge verwendet werden, um Verwaltungsinformationen zu speichern, bis das Aufzeichnungsmedium geschlossen wird, wobei jeder temporäre Datenträger-/Fehlerverwaltungsbereich vollkommen genutzt wird mit Ausnahme der ersten und zweiten Indikatoren im ersten temporären Datenträger-/Fehlerverwaltungsbereich, bevor ein nächster temporärer Datenträger-/Fehlerverwaltungsbereich verwendet wird, und wobei die ersten und zweiten Indikatoren in einem Kopfbereich des ersten temporären Datenträger-/Fehlerverwaltungsbereichs liegen.

8. Vorrichtung nach Anspruch 7, wobei ein erster Indikator eine Kopie von temporären Datenträger-Definitionsstruktur-Informationen aufweist, die in einem entsprechenden temporären Fehler-/Datenträgerverwaltungsbereich zuerst aufgezeichnet wurden, sobald der entsprechende temporäre Fehler-/Datenträgerverwaltungsbereich verwendet wird, wobei die temporären Datenträger-Definitionsstruktur-Informationen zumindest den Ort der letzen Fehlerliste in einem zuletzt verwendeten temporären Fehler-/Datenträgerverwaltungsbereich anzeigen.

9. Vorrichtung nach Anspruch 7 oder 8, wobei die Wiedergabevorrichtung ferner aufweist:
einen Datenprozessor (13), der dazu ausgebildet ist, ein Signal vom Aufnehmer (11) in einen Signalwert umzuwandeln,
eine Servoeinrichtung (14), die dazu ausgebildet ist, den Aufnehmer (11) zu steuern, um Signale vom Aufzeichnungsmedium zu lesen, und
einen Speicher (15), der dazu ausgebildet ist, zum Aufzeichnungsmedium gehörige Informationen temporär zu speichern, wobei der Mikrocomputer (16) dazu ausgebildet ist, den Betrieb des Datenprozessors (13), der Servoeinrichtung (14) und des Speichers (15) zu steuern.

10. System mit:
einer Wiedergabevorrichtung nach Anspruch 7 und einem Host (20), der wirksam mit einem Mikrocomputer (16) der Wiedergabevorrichtung verbunden ist und dazu ausgebildet ist, einen Wiedergabebefehl zur Wiedergabe von Daten vom Aufzeichnungsmedium an den Mikrocomputer (16) zu senden.

11. Vorrichtung oder System nach einem der Ansprüche 1 bis 10, wobei der erste temporäre Datenträger-/Fehlerverwaltungsbereich zunächst in der bestimmten Verwendungsreihenfolge verwendet wird.

12. Vorrichtung oder System nach einem der Ansprüche 1 bis 11, wobei der zweite Indikator die minimale Aufzeichnungseinheit des ersten Kopfs ist, die im ersten temporären Datenträger-/Fehlerverwaltungsbereich liegt.

13. Vorrichtung oder System nach einem der Ansprüche 1 bis 12, wobei jeder der ersten Indikatoren die Größe einer minimalen Aufzeichnungseinheit auf dem Aufzeichnungsmedium aufweist und die ersten Indikatoren minimale Aufzeichnungseinheiten ausgehend von der minimalen Aufzeichnungseinheit des zweiten Kopfs sind, die im ersten temporären Datenträger-/Fehlerverwaltungsbereich liegt.

## Revendications

1. Dispositif d'enregistrement pour enregistrer des informations de gestion sur un support d'enregistrement non réinscriptible, le support d'enregistrement comprenant une zone d'entrée, une zone de données comportant une zone libre et une zone de données d'utilisateur, et une zone de sortie, les zones d'entrée et de sortie comprenant une pluralité de zones de gestion de défaut pour stocker des informations de gestion lorsque le support d'enregistrement doit être fermé, le dispositif comprenant :
une unité de collecte (11) configurée pour écrire/lire des données sur le support d'enregistrement ; et
un micro-ordinateur couplé de manière opérationnelle à l'unité de collecte (11) et configuré pour commander à l'unité de collecte (11) d'enregistrer des données sur un premier indicateur correspondant à une zone de gestion de disque/défaut temporaire en cours d'utilisation lorsque la zone de gestion de disque/défaut temporaire est en cours d'utilisation pour enregistrer des informations de gestion, dans lequel le support d'enregistrement comprend une pluralité de premiers indicateurs, situés dans une première zone de gestion de disque/défaut temporaire fournie dans la zone d'entrée, pour indiquer quelle zone de gestion de disque/défaut temporaire est en cours d'utilisation, la pluralité de premiers indicateurs correspondant respectivement, à l'exception de la première zone de gestion de disque/défaut temporaire, à une pluralité de zones de gestion de disque/défaut temporaires du support d'enregistrement utilisées l'une après l'autre dans un ordre d'utilisation désigné pour stocker des informations de gestion jusqu'à ce que le support d'enregistrement soit fermé, chaque zone de gestion de disque/défaut temporaire étant complètement utilisée à l'exception des premier et deuxième indicateurs dans la première zone de gestion de disque/défaut temporaire avant l'utilisation d'une zone de gestion de disque/défaut temporaire suivante ; et configuré pour commander à l'unité de collecte (11) d'enregistrer des données sur un deuxième indicateur situé dans la première zone de gestion de disque/défaut temporaire lors de la fermeture du support d'enregistrement pour indiquer que le support d'enregistrement est fermé, et dans lequel les premier et deuxième indicateurs sont situés dans une portion de tête de la première zone de gestion de disque/défaut temporaire.

2. Dispositif selon la revendication 1, dans lequel le micro-ordinateur est configuré pour commander à l'unité de collecte (11) d'enregistrer, sur le premier indicateur correspondant à la zone de gestion de disque/défaut temporaire en cours d'utilisation, une copie des informations de structure de définition de disque temporaires enregistrées en premier dans la zone de gestion de disque/défaut temporaire en cours d'utilisation, les informations de structure de définition de disque temporaires indiquant au moins un emplacement de la plus récente liste de défauts dans une zone de gestion de disque/défaut temporaire utilisée le plus récemment.

3. Dispositif selon la revendication 1 ou 2, dans lequel le micro-ordinateur (16) est configuré pour commander à l'unité de collecte (11) d'enregistrer, sur chacune des zones de gestion de défauts, une copie des plus récentes informations de gestion enregistrées dans une zone de gestion de disque/défaut temporaire utilisée le plus récemment lors de la fermeture du support d'enregistrement.

4. Dispositif selon l'une des revendications 1 à 3, dans lequel le micro-ordinateur est configuré pour déterminer quelle zone de gestion de disque/défaut temporaire est en cours d'utilisation selon que des données sont enregistrées ou pas sur chacun des premiers indicateurs.

5. Dispositif selon l'une des revendications 1 à 4, dans lequel le dispositif d'enregistrement comprend en outre :
un processeur de données (13) configuré pour moduler un signal dans un signal d'enregistrement ou pour convertir un signal à partir de l'unité de collecte (11) en une valeur de signal ;
un servo (14) configuré pour commander à l'unité de collecte (11) d'enregistrer/lire un signal sur/à partir du support d'enregistrement ; et
une mémoire (15) configurée pour stocker provisoirement des données associées au support d'enregistrement, dans lequel le micro-ordinateur (16) est configuré pour commander des opérations du processeur de données (13), du servo (14) et de la mémoire (15).

6. Système comprenant :
un dispositif d'enregistrement selon la revendication 1 ; et
un hôte (30), couplé de manière opérationnelle à un micro-ordinateur (16) du dispositif d'enregistrement/reproduction, configuré pour transmettre au micro-ordinateur (16) une commande d'enregistrement pour enregistrer des données sur le support d'enregistrement.

7. Dispositif de reproduction pour reproduire des informations de gestion enregistrées sur un support d'enregistrement non réinscriptible, le support d'enregistrement comprenant une zone d'entrée, une zone de données comportant une zone libre et une zone de données d'utilisateur, et une zone de sortie, les zones d'entrée et de sortie comprenant une pluralité de zones de gestion de défaut pour stocker des informations de gestion lorsque le support d'enregistrement doit être fermé, le dispositif de reproduction comprenant :
une unité de collecte (11) configurée pour lire des données du support d' enregistrement ; et
un micro-ordinateur (16) couplé de manière opérationnelle à l'unité de collecte (11) et configuré pour déterminer si le support d'enregistrement a été fermé ou pas selon que des données sont enregistrées ou pas sur un deuxième indicateur, le deuxième indicateur étant situé dans une première zone de gestion de disque/défaut temporaire fournie dans la zone d'entrée pour indiquer si le support d'enregistrement est fermé ou pas, et pour commander à l'unité de collecte (11) de lire des informations de gestion enregistrées dans une zone de gestion de défaut si le support d'enregistrement a été fermé ; et configuré pour déterminer quelle zone de gestion de disque/défaut temporaire est en cours d'utilisation d'informations de gestion d'enregistrement selon que des données sont enregistrées ou pas sur chacun d'une pluralité de premiers indicateurs, la pluralité de premiers indicateurs étant situés dans la première zone de gestion de disque/défaut temporaire pour indiquer quelle zone de gestion de disque/défaut temporaire est en cours d'utilisation, et commander à l'unité de collecte (11) de lire des informations de gestion enregistrées dans une zone de gestion de disque/défaut temporaire déterminée comme étant en utilisation si le support d'enregistrement n'a pas été fermé, dans lequel la pluralité de premiers indicateurs correspondent respectivement, à l'exception de la première zone de gestion de disque/défaut temporaire, à une pluralité de zones de gestion de disque/défaut temporaires du support d'enregistrement utilisées l'une après l'autre dans un ordre d'utilisation désigné pour stocker des informations de gestion jusqu'à ce que le support d'enregistrement soit fermé, chaque zone de gestion de disque/défaut temporaire étant complètement utilisée à l'exception des premier et deuxième indicateurs dans la première zone de gestion de disque/défaut temporaire avant l'utilisation d'une zone de gestion de disque/défaut temporaire suivante, et dans lequel les premier et deuxième indicateurs sont situés dans une portion de tête de la première zone de gestion de disque/défaut temporaire.

8. Dispositif selon la revendication 7, dans lequel un premier indicateur contient une copie d'informations de structure de définition de disque temporaire enregistrées en premier dans une zone de gestion de disque/défaut temporaire correspondante une fois que la zone de gestion de disque/défaut temporaire correspondante est en cours d'utilisation, les informations de structure de définition de disque temporaire indiquant au moins un emplacement de la plus récente liste de défauts à l'intérieur d'une zone de gestion de disque/défaut temporaire utilisée le plus récemment.

9. Dispositif selon la revendication 7 ou 8, dans lequel le dispositif de reproduction comprend en outre :
un processeur de données (13) configuré pour convertir un signal à partir de l'unité de collecte (11) en une valeur de signal ;
un servo (14) configuré pour commander à l'unité de collecte (11) de lire des signaux depuis le support d'enregistrement ; et
une mémoire (15) configurée pour stocker provisoirement des informations associées au support d'enregistrement, dans lequel le micro-ordinateur (16) est configuré pour commander des opérations du processeur de données (13), du servo (14), et de la mémoire (15).

10. Système comprenant :
un dispositif de reproduction selon la revendication 7 ; et
un hôte (20), couplé de manière opérationnelle à un micro-ordinateur (16) du dispositif de reproduction, configuré pour transmettre au micro-ordinateur (16) une commande de reproduction pour reproduire des données à partir du support d'enregistrement.

11. Dispositif ou système selon l'une des revendications 1 à 10, dans lequel la première zone de gestion de disque/défaut temporaire est utilisée en premier dans l'ordre d'utilisation désigné.

12. Dispositif ou système selon l'une des revendications 1 à 11, dans lequel le deuxième indicateur est l'unité d'enregistrement minimale de la première tête située dans la première zone de gestion de disque/défaut temporaire.

13. Dispositif ou système selon l'une des revendications 1 à 12, dans lequel chacun des premiers indicateurs a une taille d'unité d'enregistrement minimale sur le support d'enregistrement et les premiers indicateurs sont constitués d'unités d'enregistrement minimales commençant à partir de l'unité d'enregistrement minimale de la deuxième tête dans la première zone de gestion de disque/défaut temporaire.
